# EUROPÄISCHE PATENTANMELDUNG

(11) **EP 2 030 722 A2**
(43) Veröffentlichungstag der Anmeldung: **04.03.2009**
(21) Anmeldenummer: 08013636.9
(22) Anmeldetag: 30.07.2008
(51) Int. Cl.: B23Q 1/48, B23Q 7/04, B65G 47/90

(54) **Werkstückwechselsystem**

(30) Priorität: 28.08.2007 DE 102007040492; 13.03.2008 DE 102008014138
(71) Anmelder: ads-tec GmbH, 70771 Leinfelden-Echterdingen (DE)
(72) Erfinder: Frank, Jens, 71686 Remseck (DE); Greif, Andreas, 73235 Weilheim (DE); Von Bonin, Volkart, 70619 Stuttgart (DE)
(74) Vertreter: Gleiss, Alf-Olav

(57) **Zusammenfassung**

Es wird ein Werkstückwechselsystem (1) für Werkstückbearbeitungsmaschinen mit einem Bearbeitungsbereich für Werkstücke (31,33), mit einem Grundgestell (3) und mit wenigstens einer Führungswelle (13), auf der ein Schlitten (17) mittels eines ersten Antriebs (19) axial verschieblich geführt ist, wobei der Schlitten (17) eine wenigstens einen Werkstückgreifer (25) aufweisende Werkstückwechseleinheit (23) umfasst, vorgeschlagen. Es zeichnet sich dadurch aus, dass die Werkstückwechseleinheit (23) mindestens ein drehbar gelagertes Pleuel (29) aufweist, welches derart mit dem wenigstens einen Werkstückgreifer (25,27) in Wirkverbindung steht, dass eine Drehung des Pleuels (29) eine Schwenkbewegung des Werkstückgreifers (25,27) in einer gedachten vertikalen Ebene bewirkt, die den Bearbeitungsbereich schneidet, sodass im Verlauf einer vollen Umdrehung des Pleuels (29) die Bewegungsbahn des wenigstens einen Werkstückgreifers (25,27) zur Durchführung eines Werkstückwechsels den Bearbeitungsbereich schneidet.

## Beschreibung

Die Erfindung betrifft ein Werkstückwechselsystem für Werkstückbearbeitungsmaschinen gemäß Oberbegriff des Anspruchs 1.

Werkstückwechselsysteme der hier angesprochenen Art sind bekannt. Sie weisen ein Grundgestell sowie wenigstens eine an diesem befestigte Führungswelle auf. Entlang der Führungswelle ist ein Schlitten mittels eines ersten Antriebs axial verschieblich geführt. Der Schlitten umfasst eine Werkstückwechseleinheit, die wenigstens einen Werkstückgreifer aufweist, mit dem bearbeitete oder unbearbeitete Werkstücke gegriffen werden können. Um einen Wechsel eines fertig bearbeiteten gegen ein noch zu bearbeitendes Werkstück zu bewirken, greift wenigstens ein Werkstückgreifer der Werkstückwechseleinheit zunächst ein zu bearbeitendes Werkstück aus einem Werkstückmagazin. Die Werkstückwechseleinheit wird anschließend mit dem Schlitten entlang der Führungswelle in einen Bearbeitungsbereich des Werkstücks in einer Werkstückbearbeitungsmaschine verlagert, wo ein Wechsel zwischen einem fertig bearbeiteten und dem noch zu bearbeitenden Werkstück stattfindet. Das von dem Werkstückgreifer gegriffene fertig bearbeitete Werkstück wird in einem dafür vorgesehenen Magazin abgelegt. Es hat sich bei den bekannten Werkstückwechselsystemen gezeigt, dass ein Wechsel zwischen einem fertig bearbeiteten und einem noch zu bearbeitenden Werkstück relativ lange dauert.

Aufgabe der Erfindung ist es daher, ein Werkstückwechselsystem mit reduzierten Werkstückwechselzeiten zu schaffen.

Zur Lösung dieser Aufgabe wird ein Werkstückwechselsystem vorgeschlagen, das die in Anspruch 1 genannten Merkmale aufweist. Das Werkstückwechselsystem zeichnet sich dadurch aus, dass die Werkstückwechseleinheit mindestens ein drehbar gelagertes Pleuel aufweist, welches derart mit dem wenigstens einen Werkstückgreifer in Wirkverbindung steht, dass eine Drehung des Pleuels eine Schwenkbewegung des Werkstückgreifers in einer gedachten vertikalen Ebene bewirkt, die den Bearbeitungsbereich schneidet, sodass im Verlauf einer vollen Umdrehung des Pleuels die Bewegungsbahn des wenigstens einen Werkstückgreifers zur Durchführung eines Werkstückwechsels den Bearbeitungsbereich schneidet. Unter der Durchführung eines Werkstückwechsels soll hier ausschließlich verstanden werden, dass während dieses Vorgangs ein fertig bearbeitetes Werkstück gegen ein noch zu bearbeitendes Werkstück ausgetauscht werden soll. Die Drehung des Pleuels bewirkt einen Bewegungsablauf der Werkstückwechseleinheit mitsamt den Werkstückgreifern, in dessen Verlauf ein Wechsel eines bearbeiteten Teils gegen ein noch zu bearbeitendes Teil stattfindet. Dadurch ist in vorteilhafter Weise eine erhebliche Reduzierung der Werkstückwechselzeit möglich.

Besonders bevorzugt wird ein Werkstückwechselsystem, das sich dadurch auszeichnet, dass bei einer Drehung des Pleuels der wenigstens eine Werkstückgreifer in einer Bewegungsbahn verläuft, die durch den Bearbeitungsbereich der Werkstückbearbeitungsmaschine verläuft, also den Bereich, in dem das Werkstück zur Bearbeitung angeordnet werden soll.

Auch bevorzugt wird ein Werkstückwechselsystem, bei dem die Führungswelle mit einem zweiten Antrieb koppelbar ist. Die Führungswelle kann so beispielsweise mittels eines Zahnriemens eine Drehbewegung des Pleuels bewirken.

Besonders bevorzugt wird auch ein Werkstückwechselsystem, das sich dadurch auszeichnet, dass das Pleuel drehbar mit dem Schlitten verbunden ist. Vorzugsweise ist das Pleuel weiterhin drehbeweglich über wenigstens eine Führungsstange mit wenigstens einem Werkstückgreifer verbunden. Durch die Verbindung des wenigstens einen

Pleuels mit dem wenigstens einen Werkstückgreifer über wenigstens eine Führungsstange, bewirkt eine Drehbewegung des Pleuels unter anderem eine Schwenkbewegung des Werkstückgreifers, die den Werkstückwechsel ermöglicht.

Weiterhin bevorzugt wird ein Werkstückwechselsystem, das sich dadurch auszeichnet, dass die Werkstückwechseleinheit wenigstens eine Steuerstange aufweist. Die wenigstens eine Steuerstange ist vorzugsweise mit dem Schlitten und mit der wenigstens einen Führungsstange drehbar verbunden und begrenzt so den Bewegungsspielraum der Führungsstange.

Besonders bevorzugt wird auch ein Werkstückwechselsystem, das sich dadurch auszeichnet, dass sämtliche Antriebe außerhalb der Werkstückbearbeitungsmaschine anordenbar sind. Es sind also keinerlei Antriebselemente, Sensoren oder sonstige elektrische und/oder elektronische Elemente an dem Schlitten und/oder an der Werkstückwechseleinheit vorgesehen, sodass die gesamte Bewegung der Werkstückwechseleinheit durch außen liegende Antriebe über die wenigstens eine Führungswelle übertragen wird. Zeitverzögerungen, die durch den Austausch von Daten beispielsweise zwischen einem Antrieb und einem Sensor entstehen, sind damit ausgeschlossen. Im Übrigen kann dadurch auf eine Energiekette verzichtet werden, die über entsprechende Kabel elektronische und/oder elektrische Elemente an dem Schlitten und/oder der Werkstückwechseleinheit mit Energie versorgt. Insbesondere ist vorgesehen, dass sämtliche Antriebe des Werkstückwechselsystems feststehend sind, also nicht bei einer Bewegung des Schlittens und damit der Werkstückwechseleinheit verlagert werden. Dadurch ist das Werkstückwechselsystem wesentlich robuster und leichter zu warten als aus dem Stand der Technik bekannte Werkstückwechselsysteme. Durch den Verzicht auf mitfahrende Antriebselemente weist die bewegliche Einheit aus Schlitten und Werkstückwechseleinheit außerdem ein reduziertes Gewicht auf, sodass sich diese entlang der Führungswelle leichter verlagern lässt und auf Stützkonstruktionen verzichtet werden kann.

Bei einem weiteren bevorzugten Werkstückwechselsystem ist wenigstens ein Federelement, insbesondere eine Gasfeder, vorgesehen, das mit dem wenigstens einen Werkstückgreifer gekoppelt ist. Durch das wenigstens eine Federelement kann ein Versatz der Werkstückgreifer, insbesondere eine Veränderung der Greiferfunktionsstellung von einem offenen in einen geschlossenen Zustand oder umgekehrt, ausgeglichen werden. Zu einem derartigen Versatz kann es beispielsweise durch die Übertragung eines Drehmoments über die relativ lange Führungswelle oder durch die Bewegung der Werkstückwechseleinheit kommen.

Es wird auch ein Werkstückwechselsystem bevorzugt, das sich dadurch auszeichnet, dass der wenigstens eine Werkstückgreifer über einen dritten Antrieb ansteuerbar ist, der vorzugsweise über eine zweite Führungswelle mit dem wenigstens einen Werkstückgreifer gekoppelt ist. Statt lediglich den ersten mit der Führungswelle gekoppelten Antrieb vorzusehen, kann also ein zweiter Antrieb vorgesehen sein, der die Greifbewegungen beziehungsweise die Funktionsstellungen des wenigstens einen Werkstückgreifers gezielt steuert und somit die Flexibilität hinsichtlich der Größe und Form der zu wechselnden Werkstücke gewährleistet.

Schließlich wird ein Werkstückwechselsystem bevorzugt, bei dem zwei Werkstückgreifer vorgesehen sind, die einen gemeinsamen Anschlag aufweisen. Diese Ausgestaltung bietet den Vorteil, dass die Werkstückwechseleinheit besonders kompakt ausgeführt ist. Vorzugsweise sind die Werkstückgreifer über einen dritten Antrieb ansteuerbar, der über eine zweite Welle mit den Werkstückgreifern 5 gekoppelt ist. Auch kann vorgesehen sein, dass ein Werkstückgreifer über einen dritten Antrieb und der zweite Werkstückgreifer über einen vierten Antrieb ansteuerbar ist.

Die Erfindung wird im Folgenden anhand der Zeichnung naher erläutert. Es zeigen:
- Figur 1: eine perspektivische Darstellung eines Werkstückwech- selsystems in einem ersten Betriebszustand vor dem Werkstückwechsel;
- Figur 2: eine perspektivische Darstellung des Werkstückwechsel- systems gemäß Figur 1 in einem zweiten Betriebszu- stand nach dem Werkstückwechsel;
- Figur 3: eine perspektivische Darstellung des Werkstückwechsel- systems gemäß Figur 1 in einem dritten Betriebszustand, und
- Figur 4: eine Seitenansicht einer Werkstückwechseleinheit.

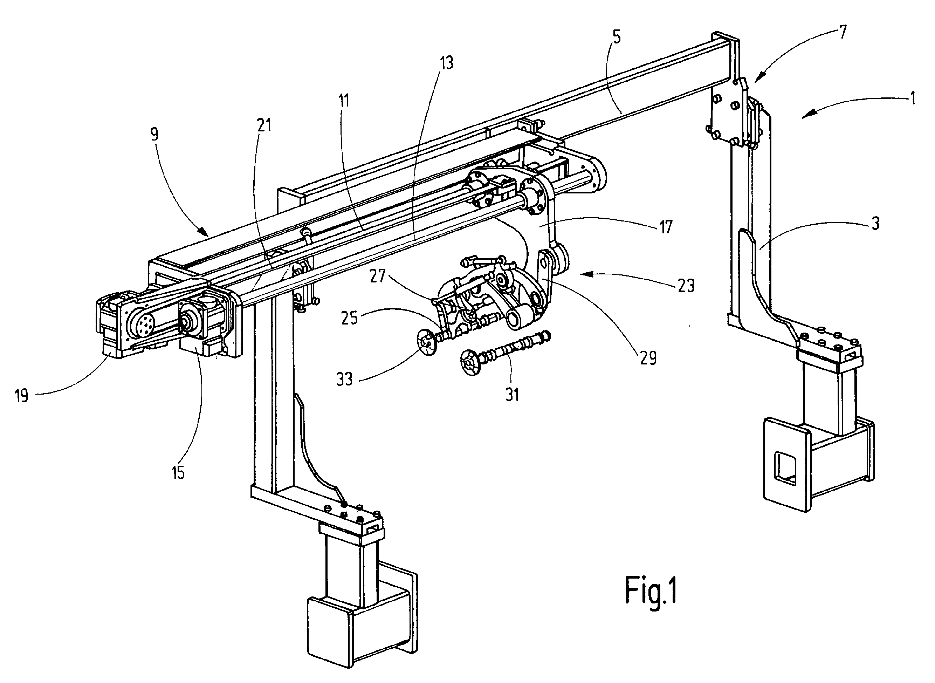

Figur 1 zeigt ein Werkstückwechselsystem 1 für Werkstückbearbeitungsmaschinen mit einem Grundgestell 3 und mit einem Tragbalken 5. Das Werkstückwechselsystem 1 kann in eine hier nicht dargestellte Werkstückbearbeitungsmaschine, beispielsweise zur Drehbearbeitung eines Werkstücks einfach integriert werden.

An dem Werkstückwechselsystem 1 ist eine Ausrichteinrichtung 7 vorgesehen, mittels derer eine Relativbewegung zwischen Tragbalken 5 und Grundgestell 3 stattfinden kann, sodass das Werkstückwechselsystem 1 an verschiedene Werkstückbearbeitungsmaschinen anpassbar ist.

An dem Tragbalken 5 ist eine Haltevorrichtung 9 vorgesehen, die wenigstens eine, hier zwei Führungswellen 11 und 13 aufweist. Am linken Ende der Führungswelle 13 gemäß Figur 1 ist ein Antrieb 15 vorgesehen, der beispielsweise als Servomotor oder als herkömmlicher Gleichstrommotor ausgebildet sein kann. Die Führungswelle 13 ist mit dem Antrieb 15 koppelbar, sodass sich also bei angeschaltetem Antrieb 15 die Führungswelle 13 dreht. Auch die Führungswelle 11 kann mit einem nicht dargestellten Antrieb zur Realisierung einer Drehbewegung der Führungswelle 11 gekoppelt sein.

Auf den Führungswellen 11 und 13 ist ein Schlitten 17 axial verschieblich gelagert. Eine axiale Verlagerung des Schlittens 17 auf den Führungswellen 11 und 13 wird vorzugsweise mittels eines ersten Antriebs 19 und einem mit diesem gekoppelten und mit dem Schlitten 17 fest verbundenen Riemen 21 bewirkt. Für den Fall, dass nur eine Führungswelle 13 vorgesehen ist, kann beispielsweise eine nicht dargestellte Führungsnut in der Halteeinrichtung 9 vorgesehen sein, entlang derer der Schlitten 17 verlagerbar ist.

Der Schlitten 17 umfasst eine Werkstückwechseleinheit 23, die wenigstens einen, hier zwei Werkstückgreifer 25 und 27 aufweist. Die Werkstückgreifer 25 und 27 sind vorzugsweise über nicht dargestellte Zahnriemen oder dergleichen mit der Führungswelle 11 verbunden. Über den bereits angesprochenen, nicht dargestellten Antrieb, kann die Führungswelle 11 gedreht werden, wodurch eine Betätigung der Werkstückgreifer 25 und 27 erfolgt, sodass eine Veränderung von deren Funktionsstellung, beispielsweise von einem geöffneten Zustand in einen geschlossenen Zustand und umgekehrt, möglich ist. Die Steuerung der Funktionsstellungen erfolgt vorzugsweise über die Änderung der Drehrichtung der Führungswelle 11.

Die Werkstückwechseleinheit 23 weist außerdem mindestens ein Pleuel 29 auf, welches drehbar mit dem Schlitten 17 verbunden ist. Eine Drehbewegung des Pleuels 29 wird vorzugsweise mittels der mit dem Antrieb 15 zusammenwirkenden Führungswelle 13 bewirkt. mit welcher das Pleuel 29 über einen Zahnriemen oder dergleichen verbunden ist. Die Drehrichtung des Pleuels 29 hängt somit von der Drehrichtung der Führungswelle 13 ab.

Um eine Drehmomentübertragung von den Führungswellen 11 und 13 auf Elemente der Werkstückwechseleinheit 23 zu gewährleisten, sind die Führungswellen 11 und 13 vorzugsweise profiliert ausgebildet.

In dem in Figur 1 dargestellten Betriebszustand des Werkstückwechselsystems 1 befindet sich der Schlitten 17 mit der Werkstückwechseleinheit 23 im Bearbeitungszentrum einer nicht dargestellten Werkstückbearbeitungsmaschine.

In der Werkstückbearbeitungsmaschine ist ein Werkstück 31 angeordnet. Bei dem hier dargestellten Werkstück 31 handelt es sich rein beispielhaft um eine Nockenwelle, die zur Drehbearbeitung zwischen nicht dargestellten Spitzen, im Folgenden Bearbeitungsbereich genannt, angeordnet ist. Als Bearbeitungsbereich kann dabei jeder Bereich einer beliebigen Werkstückbearbeitungsmaschine in Betracht kommen, in welchem ein beliebiges Werkstück einer Bearbeitung unterzogen wird. Das Werkstückwechselsystem 1 ist demnach nicht auf den Einsatz in einer Werkstückbearbeitungsmaschine zur Bearbeitung zwischen Spitzen begrenzt, sondern ist dafür geeignet, in einer Vielzahl anderer Werkstückbearbeitungsmaschinen zum Einsatz zu kommen.

In Eingriff mit dem Werkstückgreifer 25 befindet sich in der Darstellung gemäß Figur 1 ein zu bearbeitendes Werkstück 33, bei dem es sich hier ebenfalls rein beispielhaft um eine Nockenwelle handelt. Das Werkstück 33 soll unmittelbar nach der Bearbeitung des Werkstücks 31 in den Bearbeitungsbereich an die Stelle des Werkstücks 31 zur Bearbeitung verlagert werden.

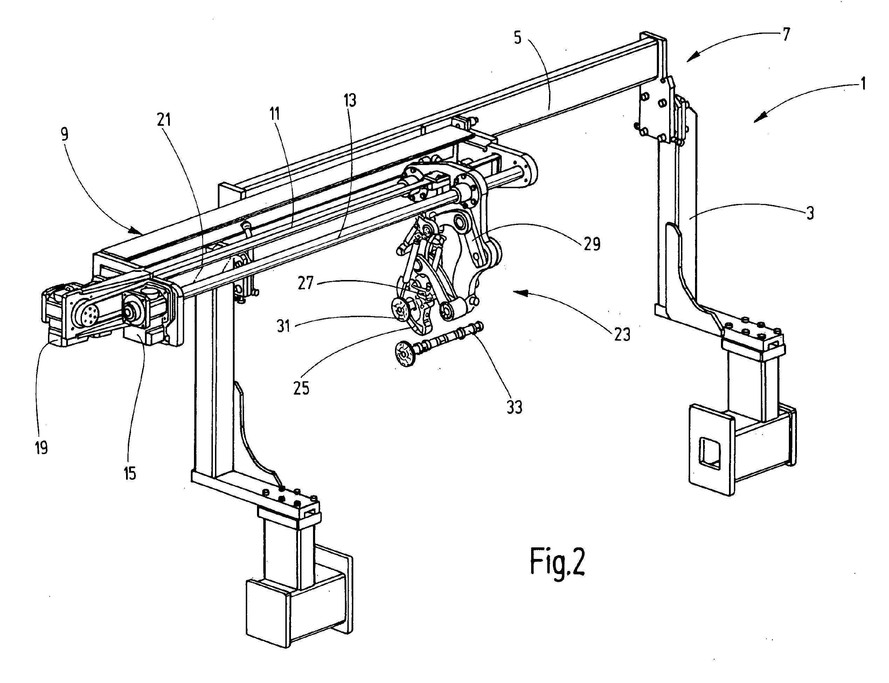

Während Figur 1 das Werkstückwechselsystem 1 in einem Betriebszustand vor dem Werkstückwechsel darstellt, zeigt Figur 2 das Werkstückwechselsystem 1 in einem weiteren Betriebszustand und zwar nachdem ein Werkstückwechsel zwischen einem fertig bearbeiteten und einem noch zu bearbeitenden Werkstück vollzogen wurde. Gleiche Teile sind mit gleichen Bezugszeichen versehen, sodass insofern auf die Beschreibung zu Figur 1 verwiesen wird.

In dem in Figur 2 dargestellten Betriebszustand befindet sich die Werkstückwechseleinheit 23 an der gleichen axialen Position bezüglich der Führungswellen 11 und 13, wie bei dem in Figur 1 gezeigten Betriebszustand. Es wird jedoch deutlich, dass sich das Pleuel 29 gegenüber dem in Figur 1 gezeigten Betriebszustand um ca. 200° gegen den Uhrzeigersinn weitergedreht hat.

Das drehbar gelagerte Pleuel 29 steht derart mit dem wenigstens einen Werkstückgreifer 25 beziehungsweise 27 in Wirkverbindung, dass eine Drehung des Pleuels 29 eine Schwenkbewegung des Werkstückgreifers 25, 27 in einer gedachten vertikalen Ebene bewirkt, die vorzugsweise senkrecht auf den Führungswellen 11, 13 steht und die den Bearbeitungsbereich schneidet. Während der Drehbewegung des Pleuels 29, ausgehend von der in Figur 1 gezeigten Winkelstellung bis zu der in Figur 2 dargestellten Winkelstellung, ist es somit möglich, dass die Werkstückwechseleinheit 23 einen vollständigen Werkstückwechsel vollzieht. Während dieses Werkstückwechsels ist also das fertig bearbeitete Werkstück 31 gegen das zu bearbeitende Werkstück 33 ausgetauscht worden.

Der detaillierte Ablauf des Werkstückwechsels soll im Folgenden näher erläutert werden:
Durch die Drehbewegung des Pleuels 29 folgen die Werkstückgreifer 25 und 27 einer Bewegungsbahn, die in der gedachten vertikalen Ebene liegt und in deren Verlauf zunächst der Werkstückgreifer 27 in den Bearbeitungsbereich verlagert wird und dort das fertig bearbeitete Werkstück 31 greift.

Im weiteren Verlauf der Drehbewegung des Pleuels 29 wird das Werkstück 31 von dem Werkstückgreifer 27 aus dem Bearbeitungsbereich verlagert. Gleichzeitig wird der Werkstückgreifer 25 mit dem Werkstück 33 in den Bearbeitungsbereich verlagert, wo das zu bearbeitende Werkstück 33 zur Bearbeitung verbleiben soll. Es findet somit eine zeitgleiche Verlagerung des rohen Werkstücks 33 und des fertigen Werkstücks statt 31.

Entscheidend ist, dass der Werkstückgreifer 27, der zunächst vorzugsweise eine geöffnete Funktionsstellung aufweist, um das fertig bearbeitete Werkstück 31 greifen zu können, schon während der Bearbeitung des Werkstücks 31 in den Bearbeitungsbereich hinein verlagert wird und dort das in Bearbeitung befindliche Werkstück 31 umgreifen kann, ohne es jedoch zu berühren. Das Pleuel 29 wird seine Drehbewegung vorläufig beenden, sobald der Werkstückgreifer 27 das in Bearbeitung befindliche Werkstück 31 umgreift, sodass der Werkstückgreifer 27 in dieser Position verharrt. Es ist sehr wohl denkbar, dass der Werkstückgreifer 27 bis auf wenige µm nah an das Werkstück 31 während dessen Bearbeitung heranverlagert wird, beziehungsweise dessen Greiferfunktionsstellung so verändert wird. dass sich ein oben erwähnter minimaler Abstand zwischen dem Werkstückgreifer 27 und dem Werkstück 31 ergibt.

Die axiale Positionierung der Werkstückwechseleinheit 23 entlang der Führungswellen 11 und 13 erfolgt vorzugsweise derart, dass der Werkstückgreifer 27 das in Bearbeitung befindliche Werkstück 31 in dem Bereich umgreifen kann, wo das Werkstück 31 bereits von einem Werkzeug bearbeitet wurde, sodass eine mögliche Kollision zwischen dem Werkstückgreifer 27 und dem nicht dargestellten Werkzeug vermieden wird.

Sobald die Bearbeitung beendet ist, umschließt der Werkstückgreifer 27 das Werkstück 31 fest, indem er seine geschlossene Funktionsstellung vorzugsweise vollständig einnimmt. Das Pleuel 29 dreht sich daraufhin, angetrieben von dem Antrieb 15 und der Führungswelle 13, weiter gegen den Uhrzeigersinn, bis der Werkstückgreifer 25 mit dem zu bearbeitenden Werkstück 33 den Bearbeitungsbereich erreicht. Der Werkstückgreifer 25 nimmt seine geöffnete Funktionsstellung ein, sobald das Werkstück 33 in dem Bearbeitungsbereich, beispielsweise zwischen Spitzen fixiert ist.

Unmittelbar nach der Fixierung des Werkstücks 33 in dem Bearbeitungsbereich und nach dem Öffnen des Werkstückgreifers 25 setzt das Pleuel 29 seine Drehbewegung fort, sodass der Werkstückgreifer 25 aus dem Bearbeitungsbereich verlagert wird, wie in Figur 2 dargestellt.

Dadurch, dass der Werkstückgreifer 27 das Werkstück 31 noch während dessen Bearbeitung umgreifen kann und unmittelbar nach Beendigung der Bearbeitung das Werkstück 31 aus dem Bearbeitungsbereich herausnehmen kann, wird die Taktzeit erheblich reduziert. Bei herkömmlichen Werkstückwechselsystemen kann demgegenüber ein Werkstückgreifer erst an ein Werkstück heranverlagert werden, wenn die Bearbeitung beendet ist.

Darüber hinaus bietet das hier vorgeschlagene Werkstückwechselsystem 1 den Vorteil, dass beide Werkstückgreifer 25 und 27 unmittelbar hintereinander ohne jeglichen Zeitverlust den Bearbeitungsbereich passieren können. Auch dadurch wird eine Reduzierung der Werkstückwechselzeit erreicht. Eine weitere Verminderung der Wechselzeit kann auch dadurch erreicht werden, dass die Geschwindigkeit der Pleueldrehbewegung erhöht wird. Denkbar ist auch, dass eine kontinuierliche Drehbewegung des Pleuels 29 erfolgt. Dies setzt voraus, dass der Befestigungsmechanismus der Werkstücke 31, 33 in dem Bearbeitungsbereich entsprechend schnell aktiviert und deaktiviert werden kann.

Insgesamt zeigt sich, dass das Pleuel 29 derart in Wirkverbindung mit den Werkstückgreifern steht, dass es eine Schwenkbewegung der beiden Werkstückgreifer 25 und 27 bewirkt, wobei die Schwenkbewegung in einer gedachten vertikalen Ebene durchgeführt wird, die vorzugsweise senkrecht auf den Führungswellen 11 und 13 steht. Die Schwenkbewegung, das heißt die Bewegungsbahn des wenigstens einen, hier der beiden Werkstückgreifer 25 und 27 in der vertikalen Ebene verläuft dabei durch den Bearbeitungsbereich eines Werkstücks. Im Verlauf einer vollen Umdrehung des Pleuels 29 schneidet die Bewegungsbahn des wenigstens einen, hier der zwei Werkstückgreifer 25 und 27 zur Durchführung eines Werkstückwechsels den Bearbeitungsbereich. Unter der Durchführung eines Werkstückwechsels soll hier ausschließlich verstanden werden, dass während dieses Vorgangs ein fertig bearbeitetes Werkstück 31 gegen ein noch zu bearbeitendes Werkstück 33 ausgetauscht werden soll. Die bloße Entnahme eines fertigen Werkstücks oder das bloße Einbringen eines rohen Werkstücks ist hierunter somit nicht zu verstehen.

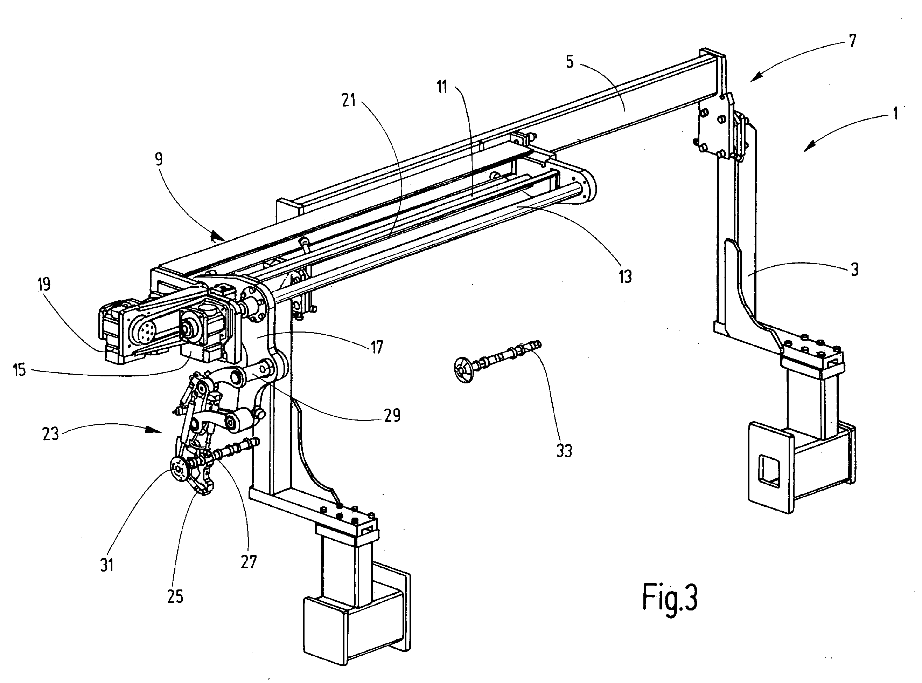

Figur 3 zeigt das Werkstückwechselsystem 1 gemäß Figur 1 und 2 in einem weiteren Betriebszustand. Gleiche Teile sind mit gleichen Bezugszeichen versehen, sodass insofern auf die Beschreibung der vorangegangenen Figuren verwiesen wird.

Der in Figur 3 gezeigte Betriebszustand des Werkstückwechselsystems 1 folgt den in Figur 1 und Figur 2 dargestellten Betriebszuständen, also dem Wechsel eines fertig bearbeiteten gegen ein zu bearbeitendes Werkstück 33.

Es wird hier noch einmal deutlich, dass sich nach dem Werkstückwechsel das fertig bearbeitete Werkstück 31 im Eingriff des Werkstückgreifers 27 befindet. Das vorher in Eingriff mit dem Werkstückgreifer 25 befindliche Werkstück 33 hingegen befindet sich jetzt zur Bearbeitung im Bearbeitungsbereich der nicht dargestellten Werkstückbearbeitungsmaschine.

Der Schlitten 17 und damit die Werkstückwechseleinheit 23 werden nach dem Werkstückwechsel mittels des Antriebs 19 und des Riemens 21 entlang der Führungswellen 11 und 13 nach links verlagert, sodass das fertig bearbeitete Werkstück 31 in einem nicht dargestellten, dafür vorgesehenen Magazin abgelegt werden kann und der Werkstückgreifer 25 ein neues noch zu bearbeitendes Werkstück aus einem nicht dargestellten Magazin greifen kann.

Das Ablegen eines fertig bearbeiteten Werkstücks und die Aufnahme eines neuen noch zu bearbeitenden Werkstücks kann auf verschiedene Art und Weise realisiert werden. Denkbar ist beispielsweise ein Werkstückwechsel wie er in der Beschreibung zu Figur 2 erläutert ist. Der Werkstückwechsel kann aber sehr wohl auch derart erfolgen, dass zwischen der Ablage eines bereits bearbeiteten Werkstücks und der Aufnahme eines zu bearbeitenden Werkstücks eine axiale Verlagerung der Werkstückwechseleinheit 23 entlang der Führungswellen 11 und 13, beispielsweise zu einem anderen Magazin erfolgt.

Entscheidend ist lediglich, dass sich die Werkstückwechseleinheit 23 über dem Bearbeitungsbereich befindet, und dass der Werkstückgreifer 27 das Werkstück bereits umgreift, während es noch bearbeitet wird und erfasst, sobald dessen Bearbeitung beendet ist.

Der Schlitten 17 und die Werkstückwechseleinheit 23 werden ausgehend von der in Figur 3 gezeigten axialen Position, entlang der Führungswellen 11 und 13 mittels des Antriebs 19 und des Riemens 21 dem Bearbeitungsbereich der Werkstückbearbeitungsmaschine zugeführt.

Nachdem der Schlitten 17 seine Endposition in der Werkstückbearbeitungsmaschine über dem Bearbeitungsbereich erreicht hat, wird der erste Antrieb 19 abgeschaltet. Der zweite Antrieb 15 kann nun eingeschaltet werden, wodurch eine Drehung der Welle 13 und damit eine Drehbewegung des Pleuels 29 bewirkt wird.

Die Drehung des Pleuels 29 bewirkt wiederum einen Werkstückwechsel des zu bearbeitenden "rohen" Werkstücks gegen das fertig bearbeitete Werkstück, wie er in der Beschreibung zu Figur 2 ausführlich erläutert wurde.

Das hier vorgeschlagene Werkstückwechselsystem 1 ermöglicht es somit in vorteilhafter Weise, im Verlauf einer vollen Umdrehung des Pleuels 29 und damit während einer Schwenkbewegung der Werkstückgreifer durch den Bearbeitungsbereich einen Werkstückwechsel zwischen den Werkstücken 31 und 33 durchzuführen.

Figur 1 und Figur 2 machen deutlich, dass während einer Drehbewegung des Pleuels 29 ein Werkstückwechsel dadurch bewirkt wird, dass die Werkstückgreifer 25 und 27 durch die Drehung des Pleuels 29 eine Bewegungsbahn in einer gedachten vertikalen Ebene beschreiben, welche den Bearbeitungsbereich der Werkstücke 31, 33 schneidet. Auf diese Weise durchlaufen die Werkstückgreifer 25 und 27 nacheinander den Bearbeitungsbereich der Werkstückbearbeitungsmaschine und bewirken dabei einen Werkstückwechsel.

Das Werkstückbearbeitungssystem 1 weist dabei lediglich zwei unabhängig voneinander wirkende Antriebe auf. Der erste Antrieb 19 bewirkt die Längsbewegung des Schlittens 17 entlang der Führungswelle 13 und der zweite Antrieb 15 bewirkt völlig unabhängig davon die Drehbewegung des Pleuels 29 und die Greifbewegung der Werkstückgreifer 25 und 27. Wie bereits erläutert wurde, kann die Steuerung der Funktionsstellungen der Werkstückgreifer 25 und 27 auch über einen dritten nicht dargestellten Antrieb realisiert werden, der mit der Führungswelle 11 zusammenwirkt.

Das Werkstückbearbeitungssystem 1 stellt somit ein einachsiges System dar, das in der Lage ist, über eine einzige Welle, nämlich die Führungswelle 13, einen Werkstückwechsel durchzuführen. Die Übertragung eines Drehmoments von der Führungswelle 13 auf das Pleuel 29 kann auf verschiedene Art und Weise, wie beispielsweise mittels eines Zahnriemens, erfolgen.

Das Werkstückbearbeitungssystem 1 erzeugt ausschließlich über die Drehbewegung des Pleuels 29 einen definierten Bewegungsablauf der Werkstückwechseleinheit 23 und damit der Werkstückgreifer 25 und 27. Das Werkstückwechselsystem 1 realisiert auf diese Weise ohne zusätzliche Antriebe quasi ein Zwangsgetriebe, wodurch die Werkstückwechselzeiten wesentlich reduziert werden. Für die Durchführung eines Werkstückwechsels sind mit dem hier vorgeschlagenen Werkstückwechselsystem 1 also lediglich zwei Antriebe 15 und 19 notwendig, um einen vollständigen Werkstückwechsel zu erzielen.

Vorzugsweise sind die Antriebe 15 und 19 außerhalb des Bearbeitungsbereichs, insbesondere vollständig außerhalb der Werkstückbearbeitungsmaschine angeordnet, was im Folgenden als außen stehende Antriebe bezeichnet wird. Sämtliche Antriebe sind außerdem vorzugsweise feststehend ausgeführt. An dem Schlitten 17 und an der Werkstückwechseleinheit 23 sind also keinerlei Antriebselemente vorgesehen, die bei einer Bewegung des Schlittens 17 mitbewegt werden müssen.

Die zwangsgesteuerte Bewegung der Werkstückwechseleinheit 23 macht es im Übrigen möglich, auf jegliche Sensorik und/oder Elektrik an dem Schlitten 17 und der Werkstückwechseleinheit 23 zu verzichten, wodurch eine Zeitverzögerung durch einen Signalaustausch ausgeschlossen wird. Es gibt damit auch keine Sensoren, die durch im Bearbeitungsbereich vorhandene Kuhl- und/oder Schmiermittel beeinträchtigt oder gar beschädigt werden könnten. Diese Ausgestaltung bietet außerdem den Vorteil, dass die außen liegenden Antriebe das Gewicht der bewegten Einheit aus Schlitten 17 und Werkstückwechseleinheit 23 wesentlich reduzieren, sodass auf aufwändige Konstruktionen zur Stabilisierung des Systems verzichtet werden kann.

Entscheidend ist, dass während einer vollen Umdrehung des Pleuels 29 der wenigstens eine Werkstückgreifer einer Bewegungsbahn folgt, welche durch den Bearbeitungsbereich einer Werkstückbearbeitungsmaschine verläuft. Sind wie im vorliegenden Ausführungsbeispiel zwei Werkstückgreifer 25 und 27 vorgesehen, durchlaufen beide Werkstückgreifer 25 und 27 den Bearbeitungsbereich der Werkstückbearbeitungsmaschine nacheinander.

Es sei an dieser Stelle noch erwähnt, dass eine Drehbewegung des Pleuels 29 auch im Uhrzeigersinn erfolgen kann. In diesem Fall greift der Werkstückgreifer 25 ein fertig bearbeitetes Werkstück und der Werkstückgreifer 27 hinterlässt ein zu bearbeitendes Werkstück in dem Bearbeitungsbereich. Die Bewegungsbahn der Werkstückwechseleinheit 23 verläuft dann genau entgegengesetzt zu der bisher beschriebenen Richtung in der gedachten vertikalen Ebene.

Wie oben bereits erläutert wurde, kann ein dritter Antrieb vorgesehen sein, der zur Ansteuerung der Werkstückgreifer 25 und 27 dient. Denkbar ist es auch, einen Werkstückgreifer über einen dritten und den anderen Werkstückgreifer über einen vierten Antrieb anzusteuern.

Auch diese Antriebe sind dann vorzugsweise außen liegende feststehende Antriebe und befinden sich also ortsfest außerhalb des Bearbeitungsbereichs, insbesondere vollständig außerhalb der Werkstückbearbeitungsmaschine.

Das Werkstückwechselsystem 1 lässt sich in eine Vielzahl von Werkstückbearbeitungsmaschinen integrieren und ist mittels der Ausrichteinrichtung 7 entsprechend anpassbar. Mit dem hier vorgeschlagenen Werkstückwechselsystem 1 ist es in vorteilhafter Weise möglich, mehrere Arbeitsschritte während nur einer einzigen vollen Umdrehung des Pleuels 29 durchzuführen.

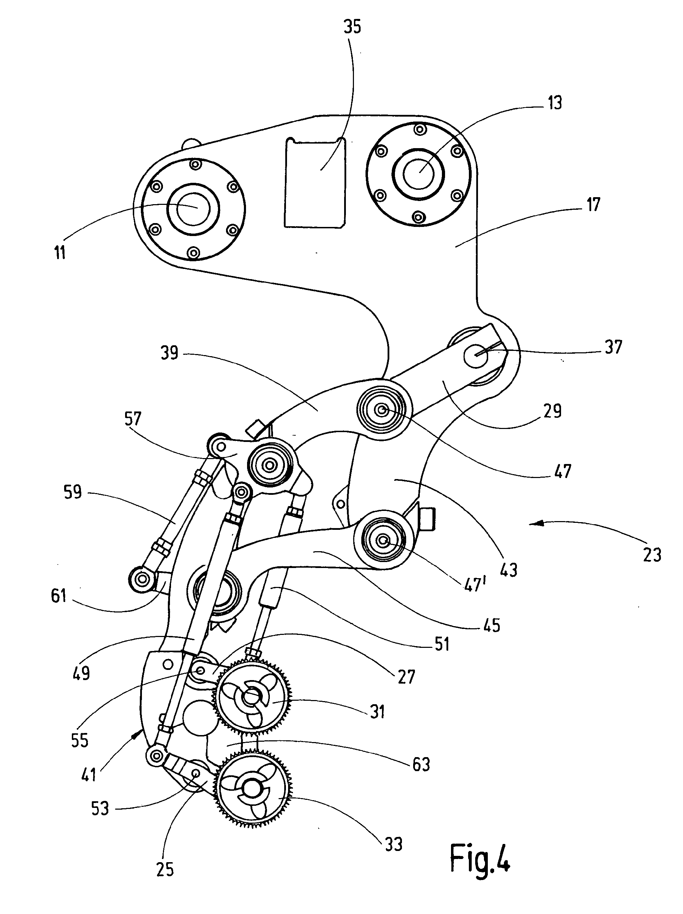

Die Funktionsweise und der Aufbau der Werkstückwechseleinheit 23 werden im Folgenden anhand von Figur 4 näher erläutert. Gleiche Teile sind mit gleichen Bezugszeichen versehen, sodass insofern auf die Beschreibung zu den vorangegangenen Figuren verwiesen wird.

Figur 4 zeigt eine Seitenansicht einer Werkstückwechseleinheit 23. In Figur 4 erkennbar sind die Führungswellen 11 und 13, an denen der Schlitten 17 axial verschieblich, hier also senkrecht zur Bildebene, verlagert werden kann. In dem Schlitten 17 ist eine Öffnung 35 vorgesehen, durch die der in den vorangegangenen Figuren dargestellte Riemen 21 geführt wird.

Dargestellt ist auch das Pleuel 29, welches drehbar um eine senkrecht zur Bildebene oder parallel zur Führungswelle 13 verlaufende Drehachse 37 mit dem Schlitten 17 verbunden ist.

Die Werkstückwechseleinheit 23 weist auch eine Führungsstange 39 auf, mit der das Pleuel 29 drehbar verbunden ist und an die sich eine die Werkstückgreifer 25 und 27 umfassende Greifereinheit 41 anschließt. Das Pleuel 29 steht somit über die Führungsstange 39 mit den Werkstückgreifern 25 und 27 in Verbindung.

Eine Drehbewegung des Pleuels 29 wird so auf die Führungsstange 39 übertragen. Das Pleuel 29 wirkt quasi als Exzenter mit der Führungsstange 39 zusammen, sodass bei einer Drehbewegung des Pleuels 29, die Führungsstange 39 und das Pleuel 29 eine Relativbewegung zueinander ausführen, wobei eine Drehachse 47 mit der Führungsstange 39 eine Rotationsbewegung um eine Drehachse 37 ausführt. Während der Drehbewegung des Pleuels 29 um die Drehachse 37 findet eine Schwenkbewegung der Führungsstange 39 statt. Die Schwenkbewegung der Führungsstange 39 wirkt auch auf die Greifereinheit 41 und damit auf die Werkstückgreifer 25 und 27.

An einem Ausläufer 43 des Schlittens 17 ist wenigstens eine Steuerstange 45 vorgesehen, die ebenfalls Teil der Werkstückwechseleinheit 23 ist und die einerseits drehbar um eine senkrecht zur Bildebene verlaufende Drehachse 47' mit dem Ausläufer 43 des Schlittens 17 und andererseits drehbar mit der Führungsstange 39 verbunden ist. Die Steuerstange 45 steuert während der Schwenkbewegung der Führungsstange 39 quasi deren transversalen Freiheitsgrad.

Durch das Zusammenspiel von Pleuel 29, Führungsstange 39 und Steuerstange 45, insbesondere deren Dimensionierungen zueinander, lässt sich eine Bewegungsbahn der Werkstückgreifer 25 und 27 realisieren, auf der sie im Verlauf einer Umdrehung des Pleuels 29 den Bearbeitungsbereich nacheinander durchlaufen. um einen Werkstückwechsel vorzunehmen.

In dem in Figur 4 dargestellten Ausführungsbeispiel sind Federelemente 49 und 51 vorgesehen, die eine Relativbewegung oder eine Veränderung der Funktionsstellung der Werkstückgreifer 25 und 27 ausgleichen sollen, die beispielsweise durch die Drehmomentübertragung über die relativ lange Führungswelle 13 und die Bewegung der Werkstückwechseleinheit 23 erzeugt wird. Vorzugsweise sind als Federelemente 49, 51 Gasfedern vorgesehen.

Das Federelement 49 ist an einem Ende drehbar um eine senkrecht zur Bildebene verlaufende Drehachse 53 mit dem Werkstückgreifer 25 verbunden. Entsprechend ist das Federelement 51 an einem Ende drehbar um eine senkrecht zur Bildebene verlaufende Drehachse 55 mit dem Werkstückgreifer 27 verbunden. An ihrem anderen Ende stehen die Federelemente 49 und 51 drehbar mit einem gemeinsamen Verbindungsglied 57 in Verbindung, das seinerseits an der Führungsstange 39 drehbar befestigt ist.

Die Federelemente 49 und 51 wirken über das Verbindungsglied 57 mit einer starren Stange 59 zusammen, die an einem Ende drehbar mit dem Verbindungsglied 57 verbunden ist und die mit ihrem anderen Ende in Verbindung mit einem Arm 61 steht, der wiederum mit der Führungsstange 39 drehbar verbunden ist.

Die Federelemente 49 und 51 gleichen so ein Spiel zwischen den Werkstückgreifern 25 und 27 und den restlichen Elementen der Werkstückwechseleinheit 23 aus, das sich aus dem Zusammenwirken der Elemente des Werkstückwechselsystems 1 ergibt. Die Federelemente 49 und 51 ermöglichen es außerdem, die Werkstückgreifer 25 und 27 unterschiedlich weit zu öffnen, sodass Werkstücke unterschiedlicher Größe und Form von den Werkstückgreifern 25 und 27 erfasst werden können, insbesondere dann, wenn kein dritter Antrieb vorgesehen ist, um die Funktionsstellungen der Werkstückgreifer 25 und 27 getrennt zu steuern.

Die beiden Werkstückgreifer 25 und 27 weisen weiterhin einen gemeinsamen Anschlag 63 auf, an dem die von den Werkstückgreifern 25 und 27 gegriffenen Werkstücke anliegen.

Wie in der vorangegangenen Beschreibung bereits erläutert wurde, kann auch vorgesehen sein, die Werkstückgreifer 25 und 27 mit einem dritten, hier nicht dargestellten außen liegenden Antrieb zu steuern, wodurch eine noch größere Flexibilität hinsichtlich der zu wechselnden Werkstückgrößen und -formen erreicht werden kann.

Denkbar ist hierbei beispielsweise, die Werkstückgreifer mittels eines Riemens oder dergleichen mit einer Welle, insbesondere mit einer Führungswelle, zu verbinden, wobei eine Rechtsdrehung der Welle eine Öffnungsbewegung des ersten Werkstückgreifers 25 und durch eine Linksdrehung der Welle eine Öffnungsbewegung des zweiten Werkstückgreifers 27 bewirkt werden kann. Auch in diesem Fall können die Federelemente 49, 51 zum Ausgleich von Relativbewegungen der Werkstückgreifer 25, 27 vorgesehen sein.

Die vorliegende Erfindung ermöglicht es somit in vorteilhafter Weise, während einer vollen Umdrehung des Pleuels 29 einen Werkstückwechsel durchzuführen. Dabei ist wenigstens ein außen liegender, feststehender Antrieb vorgesehen, über den die Drehbewegung des Pleuels 29 und damit der gesamte Werkstückwechselvorgang bewirkt wird.

Durch die feststehenden außenliegenden Antriebe und die Betätigung der Werkstückwechseleinheit 23 über die Führungswellen 11, 13 sind in der Werkstückbearbeitungsmaschine ausschließlich rein mechanisch betätigbare Elemente des Werkstückwechselsystems 1 vorgesehen, wodurch dieses wesentlich störkonturärmer ist als herkömmliche Systeme.

Das hier vorgeschlagene Werkstückwechselsystem 1 ermöglicht so wesentlich reduzierte Werkstückwechselzeiten. Außerdem kann durch die außerhalb der Werkstückbearbeitungsmaschine liegenden Antriebe auf mitfahrende Elektronik oder Sensorik verzichtet werden, wodurch das hier vorgeschlagene Werkstückwechselsystem 1 wesentlich robuster und störkonturärmer gegenüber herkömmlichen Werkstückwechselsystemen ist.

Dadurch, dass die Werkstückgreifer 25 und 27 im Verlauf der Drehbewegung des Pleuels 29 auf ihrer Bewegungsbahn ohne einen zusätzlichen Mechanismus, sondern alleine durch das mechanische Zusammenspiel von Pleuel 29, Führungsstange 39 und Steuerstange 45 in den Bearbeitungsbereich verlagert werden, kann im Übrigen auf jegliche Sensorik verzichtet werden.

## Patentansprüche

1. Werkstückwechselsystem (1) für Werkstückbearbeitungsmaschinen mit einem Bearbeitungsbereich für Werkstücke (31,33), mit einem Grundgestell (3) und mit wenigstens einer Führungswelle (13), auf der ein Schlitten (17) mittels eines ersten Antriebs (19) axial verschieblich geführt ist, wobei der Schlitten (17) eine wenigstens einen Werkstückgreifer (25,27) aufweisende Werkstückwechseleinheit (23) umfasst, **dadurch gekennzeichnet, dass** die Werkstückwechseleinheit (23) mindestens ein drehbar gelagertes Pleuel (29) aufweist, welches derart mit dem wenigstens einen Werkstückgreifer (25,27) in Wirkverbindung steht, dass eine Drehung des Pleuels (29) eine Schwenkbewegung des Werkstückgreifers (25,27) in einer gedachten vertikalen Ebene bewirkt, die den Bearbeitungsbereich schneidet, sodass im Verlauf einer vollen Umdrehung des Pleuels (29) die Bewegungsbahn des wenigstens einen Werkstückgreifers (25,27) zur Durchführung eines Werkstückwechsels den Bearbeitungsbereich schneidet.

2. Werkstückwechselsystem nach Anspruch 1, **dadurch gekennzeichnet, dass** die wenigstens eine Führungswelle (13) mit einem zweiten Antrieb (15) koppelbar ist.

3. Werkstückwechselsystem nach Anspruch 1 oder 2, **dadurch gekennzeichnet, dass** das Pleuel (29) drehbar mit dem Schlitten (17) verbunden ist.

4. Werkstückwechselsystem nach einem der vorhergehenden Ansprüche, **dadurch gekennzeichnet, dass** das Pleuel (29) über wenigstens eine Führungsstange (39) mit wenigstens einem Werkstückgreifer (25,27) in Verbindung steht.

5. Werkstückwechselsystem nach Anspruch 4, **dadurch gekennzeichnet, dass** die wenigstens eine Führungsstange (39) drehbeweglich mit dem Pleuel (29) verbunden ist.

6. Werkstückwechselsystem nach Anspruch 4, **dadurch gekennzeichnet, dass** die Werkstückwechseleinheit (23) wenigstens eine Steuerstange (55) aufweist, die mit dem Schlitten (17) und mit der wenigstens einen Führungsstange (39) drehbar verbunden ist.

7. Werkstückwechselsystem nach einem der vorhergehenden Ansprüche, **dadurch gekennzeichnet, dass** das Pleuel (29) mittels des mit der wenigstens einen Führungswelle (13) koppelbaren zweiten Antriebs (15) angetrieben wird.

8. Werkstückwechselsystem nach einem der vorhergehenden Ansprüche, **dadurch gekennzeichnet, dass** die wenigstens eine Führungswelle (13) über einen Riemen (21) mit dem Pleuel (29) gekoppelt ist.

9. Werkstückwechselsystem nach einem der vorhergehenden Ansprüche, **dadurch gekennzeichnet, dass** sämtliche Antriebe (15,19) des Werkstückwechselsystems (1) außerhalb der Werkstückbearbeitungsmaschine anordenbar sind.

10. Werkstückwechselsystem nach einem der vorhergehenden Ansprüche, **dadurch gekennzeichnet, dass** sämtliche Antriebe (15,19) des Werkstückwechselsystems (1) feststehend sind.

11. Werkstückwechselsystem nach einem der vorhergehenden Ansprüche, **dadurch gekennzeichnet, dass** wenigstens ein Federelement (49,51) vorgesehen ist, das mit dem wenigstens einen Werkstückgreifer (25,27) gekoppelt ist.

12. Werkstückwechselsystem nach einem der vorhergehenden Ansprüche, **dadurch gekennzeichnet, dass** der wenigstens eine Werkstückgreifer (25,27) über einen dritten Antrieb ansteuerbar ist, der über eine zweite Welle (11) mit dem wenigstens einen Werkstückgreifer (25,27) gekoppelt ist.

13. Werkstückwechselsystem nach einem der vorhergehenden Ansprüche, **dadurch gekennzeichnet, dass** zwei Werkstückgreifer (25,27) vorgesehen sind, die einen gemeinsamen Anschlag (63) aufweisen.

14. Werkstückwechselsystem nach Anspruch 13, **dadurch gekennzeichnet, dass** die beiden Werkstückgreifer (25,27) über einen dritten Antrieb ansteuerbar sind, der über eine zweite Welle mit den Werkstückgreifern (25,27) gekoppelt ist.

15. Werkstückwechselsystem nach Anspruch 13, **dadurch gekennzeichnet, dass** ein Werkstückgreifer (25) über einen dritten Antrieb und der zweite Werkstückgreifer (27) über einen vierten Antrieb ansteuerbar ist.

16. Werkstückwechselsystem nach einem der vorhergehenden Ansprüche, **dadurch gekennzeichnet, dass** keine elektronischen und/oder elektrischen Elemente an dem Schlitten (17) und/oder an der Werkstückwechseleinheit (23) vorgesehen sind.
